# EUROPEAN PATENT APPLICATION

(11) **EP 4 467 315 A1**
(43) Date of publication of application: **27.11.2024**
(21) Application number: 24171743.8
(22) Date of filing: 22.04.2024
(51) Int. Cl.: B29C 45/02, B29C 45/54

(54) **IMPROVED INJECTION MOLDING APPARATUS**

(30) Priority: 21.04.2023 US 202318305271
(71) Applicant: Dray, Robert F., Dallas, TX 75229 (US)
(72) Inventor: Dray, Robert F., Dallas, TX 75229 (US)
(74) Representative: Barker Brettell LLP

(57) **Abstract**

An injection molding apparatus (11) has an injection cylinder (23) in fluid communication with the mold (41), wherein movement of a piston (25) within the cylinder (23) injects a selected quantity of resin into the mold (41). A plasticizing unit includes a flighted screw (15) rotating in a heated containment barrel (13) for plasticizing resin, the plasticizing unit in selective fluid communication with the injection cylinder (23) for supplying the injection cylinder (23) with plasticized resin. A conduit (21) connects the plasticizing unit to the injection cylinder (23) to communicate resin from the plasticizing unit to the injection cylinder (23).

## Description

### BACKGROUND

### 1. Field of the Invention --

The present invention relates to improvements in injection molding apparatus. More particularly, the present invention relates to an injection molding apparatus that employs a flighted screw turning and reciprocating in a containment barrel to plasticize polymer for injection and a separate piston and cylinder arrangement to inject the polymer into the mold.

### 2. Summary of Prior Art --

Injection molding-the process of injecting a quantity, or shot, of molten plastic or resin melt into a mold-is today one of the world's dominant forms of plastic article manufacture. In this process, resin is melted, mixed, and made flowable by a combination of the application of heat and kinetic energy, usually through the use of a flighted screw that rotates and reciprocates within a heated containment barrel. A mold is designed and manufactured with a cavity configuration that allows for the specific part or parts to be molded. The mold is mounted in a mold clamp and is in fluid communication with the containment barrel.

After the rotating screw and applied heat have plasticized the resin, the screw is moved forward to inject the shot of plastic from the accumulation volume into the mold. The operation known as pack-and-hold (exerting additional pressure on the resin in the mold) is accomplished by further forward movement of the screw.

Before the advent of the flighted screw, the plastic or polymer simply was contained in a cylinder, which was heated by conduction. When the polymer was melted it was conveyed into an injection cylinder where a piston moved forward to inject the plastic into the mold. The piston performed the pack-and-hold operation.

The plasticizing action of the flighted screw rotating in the heated barrel dramatically increased the speed of the process. Nevertheless, use of the rotating and reciprocating screw imposes several limitations on the process. First a non-return valve is included on the end of the screw to permit plastic to flow past the screw during plasticizing but not during injection. Accurate shot size is a function of the accuracy of the non-return valve. Also, the size of the shot is determined by the inner diameter of the barrel and the stroke length of the screw; thus, the rate of recovery (backward movement of the screw to pre-injection position and filling of the accumulation volume downstream of the screw) is a function of the shot size. Screw diameter should be determined only by the recovery requirements and the cylinder diameter by the force required to fill the mold. Shot size thus is a screw-and-barrel-length design feature, and variation in the shot size without corresponding change of screw and barrel length can cause reductions in efficiency of the plasticizing process. Sometimes shut-off valves are used to halt flow between barrel and mold, and are required if the screw is to recover when the mold is open.

There are also known injection molding apparatus that employ the screw/heated barrel arrangement (without the ability to reciprocate) to fill an accumulator, which in turn provides pressure to inject shots into the mold. The accumulator also performs the pack-and-hold functions. Nevertheless, the screw must provide constant temperature and pressure to the accumulator or shot density and weight will vary. Furthermore, due to the relatively large volume of the accumulator and associated tubing and valving that are unswept by a piston, color changes are problematic, requiring lengthy purging operations and increasing the likelihood of scrap parts. The three-way valve required for this type of machine directs the flow from the screw to the accumulator and from the accumulator to the mold has been a common source of problems. If the valve fails to operate properly, high injection pressures can be directed to and exerted upon the screw, destroying the thrust assembly of the screw. Short (small volume) shots and leakage are also common problems.

Commonly invented and owned U.S. Patent Nos. 7,314,368 and 6,739,862 to Robert F. Dray largely solve many of the foregoing problems by "de-coupling" the plasticizing action of the screw from the function of injecting melted resin into the mold, while retaining the advantages of reciprocating screw and accumulator systems.

A need exists, therefore, for an injection molding apparatus that avoids the drawbacks of both reciprocating screw and accumulator systems, while providing the advantages and benefits of both.

### SUMMARY OF THE INVENTION

It is a general object of the present invention to provide an improved injection molding apparatus for injecting resin into a mold. This and other objects of the invention are obtained by providing an injection molding apparatus having an injection cylinder in fluid communication with the mold, wherein movement of a piston within the cylinder injects a selected quantity of resin into the mold. A plasticizing unit includes a flighted screw rotating in a heated containment barrel for plasticizing resin the plasticizing unit in selective fluid communication with the injection cylinder for supplying the injection cylinder with plasticized resin. A conduit connects the plasticizing unit to the injection cylinder to communicate resin from the plasticizing unit to the injection cylinder.

According to one embodiment of the present invention, a backpressure-prevention device is associated with the injection cylinder to prevent pressure developed in the injection cylinder from acting on one of the conduit and plasticizing unit. The backpressure-prevention device preferably operates without user intervention., and may be a ball-check valve.

According to another embodiment of the present invention, a nozzle extends from the injection cylinder into a bore in the mold, the nozzle including a central bore in fluid communication with the injection cylinder, the nozzle configured to selectively permit flow of resin into the mold and to exert pressure on resin in the mold through reciprocation of the nozzle in the bore.

According to still another embodiment of the present invention, the backpressure prevention device further comprises an inlet in the injection cylinder connected to the conduit; and a channel formed in the piston that is movable between an open position aligned with the inlet and a closed position in which the piston obstructs the inlet.

According to yet another embodiment of the present invention, a secondary plunger is arranged for reciprocation within the piston, wherein the secondary plunger selectively exerts pressure on resin in the injection cylinder independently of the piston.

According to still another embodiment of the present invention, a mold is nozzle movable into and out of communication with the mold; and a cylinder nozzle is in fluid communication between the mold nozzle and the injection cylinder.

Other objects, features, and advantages of the present invention will become apparent to those skilled in the art with reference to the Figures, and to the detailed description, which follow.

### BRIEF DESCRIPTION OF THE DRAWINGS

Figure 1 is a top section view of an injection molding apparatus in accordance with an embodiment of the invention.
Figure 2 is an enlarged, fragmentary section view of a portion of the plasticizing barrel of the apparatus of Figure 1.
Figure 3 is an enlarged, fragmentary section view of a portion of the injection cylinder of the apparatus of Figure 1.
Figures 4A and 4B are cross-section views, taken along line 4-4 of Figure 3.
Figure 5 is a fragmentary, longitudinal section view of a portion of an injection cylinder according to another embodiment of the apparatus of Figure 1.
Figure 6 is a top section view of an injection molding apparatus in accordance with another embodiment of the invention.
Figure 7 is a fragmentary, longitudinal section view of a portion of an injection cylinder according to the embodiment of Figure 6.
Figure 8 is an elevation view of a screw for use in the plasticizing unit of an embodiment of the present invention.
Figure 9 is a fragmentary section view of a portion of the screw of Figure 8, taken along section line X-X.
Figure 10 is a longitudinal section view of an exemplary ball check valve in accordance with an embodiment of the present invention.

### DETAILED DESCRIPTION

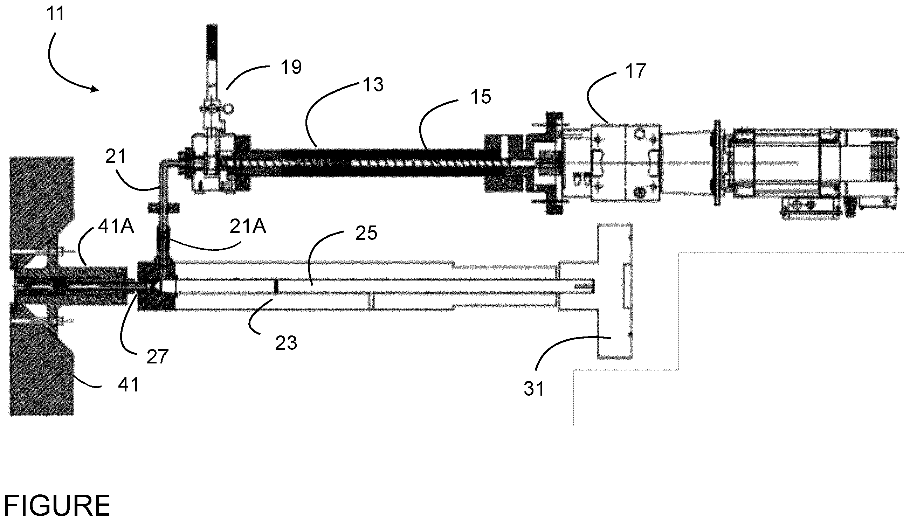

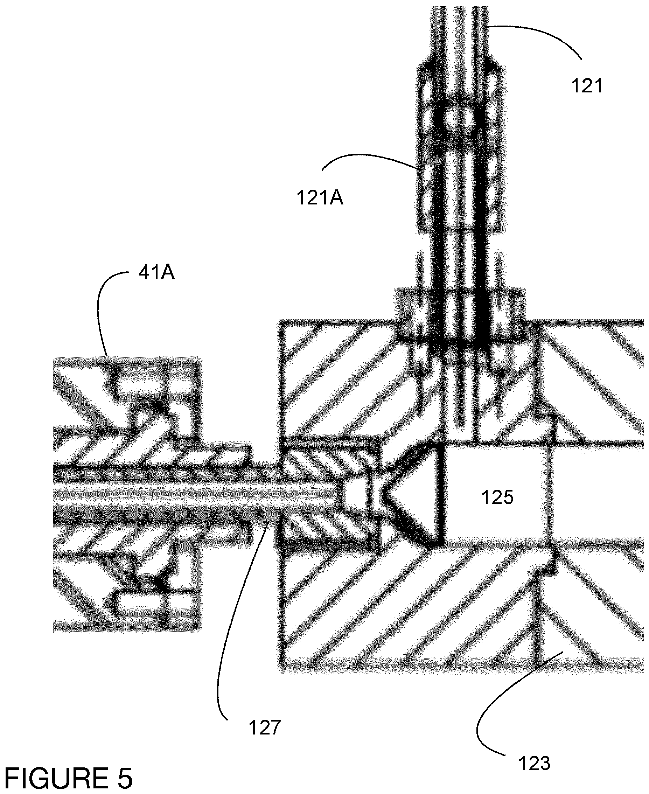

Turning now to the Figures, and particularly to Figure 1, an injection-molding apparatus 11 according one embodiment of the present invention is depicted (the embodiment of the apparatus illustrated in Figure 1 corresponds to the embodiment of Figure 5 of the application, but the structures described are common to all embodiments except as noted). Apparatus 11 comprises a plasticizing unit comprising plasticizing barrel 13, in which a flighted screw 15 is rotated by a motor 17. Screw 15 may also be reciprocated, longitudinally, within the bore of barrel 13 in which it rotates. Barrel 13 may be heated, and the action of the heat and screw 15 rotating in barrel 13 melts and mixes ("plasticizes") polymer pellets or granules (unpelletized, scrap or recycled "regrind" is preferred) that are introduced into barrel 13 through a hopper proximal motor 17. It may be preferred that screw 15 be provided with a "devolatilizing" section that permits moisture and volatile components to escape barrel 13 through vents to the atmosphere to reduce or eliminate moisture and any volatile components of the resin melt.

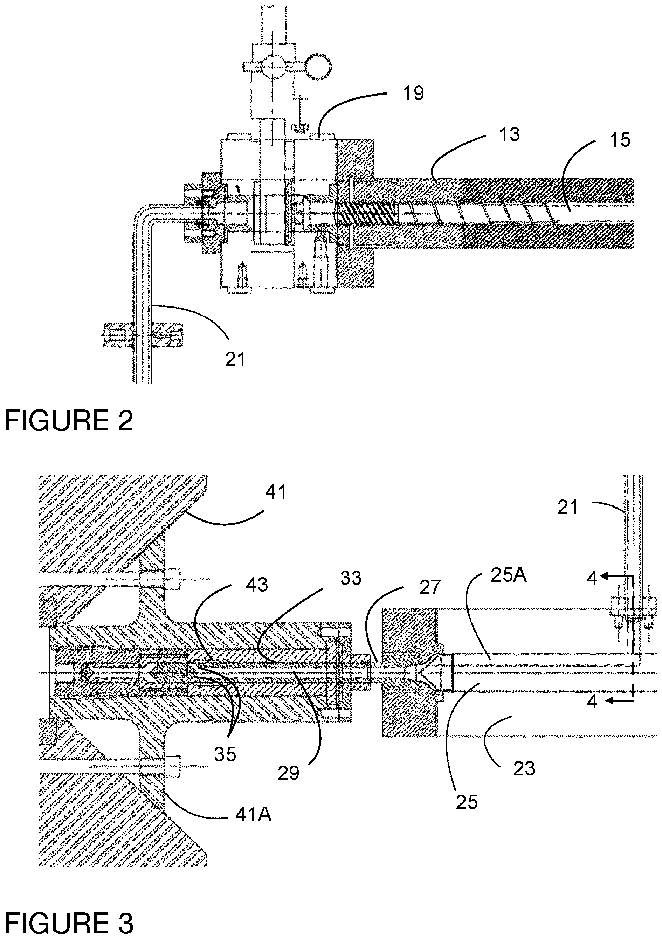

As shown in greater detail in Figure 2, the melted polymer or "melt" may pass through a screen assembly 19, where particles of certain size may be screened or filtered from the melt, to a conduit 21 that is in fluid communication with injection cylinder 23. In use of regrind plastic feed material, screen assembly 19 is important to screen contaminants out of the melt. Screen assembly 19 must be monitored and cleaned or changed frequently to avoid clogging and backpressure of melt into barrel 13. The foregoing structures of the plasticizing unit or portion are common to all embodiments of the invention.

An injection or extrusion portion of the apparatus may comprise an injection cylinder 23 carried by a carriage 31, which permits longitudinal reciprocation of cylinder 23 relative to a mold 41. Injection cylinder 23 may be in fluid communication with the inlet or platen of mold 41 by a nozzle 27 extending from the distal or discharge end of cylinder 23. Melt or resin may pass through an inlet into the interior of injection cylinder 23 through conduit 21. The foregoing features and structures are common in most respects to the embodiments of the invention depicted in Figures 2 through 5. All embodiments of the invention include a backflow and backpressure-prevention device that protects components upstream of the injection cylinder from reverse flow of resin and from pressures developed in the injection cylinder during injection operations. To this end, a conventional ball-check valve 21A may be located between conduit 21 and injection cylinder 23, to provide this backflow and backpressure protection in a self-actuating fashion that does not require user intervention.

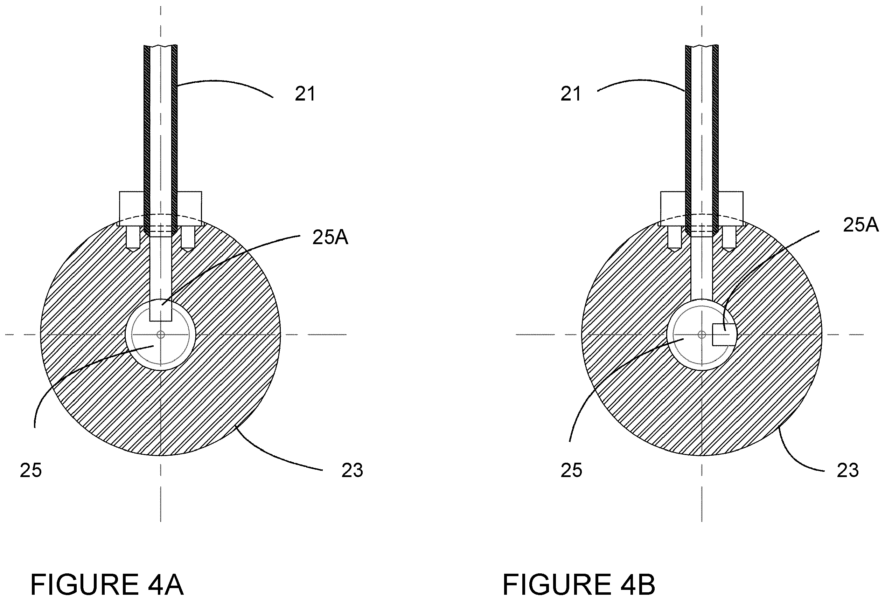

Figure 3 illustrates an embodiment of the invention in which a ball-check valve (21A in Figure 1) in conduit 21 may be optional. In this embodiment, the inlet to injection cylinder 23 is upstream of the downstream distal end, outlet, or discharge end of cylinder 23. A piston 25 may reciprocate longitudinally within cylinder 23 and has a longitudinal channel 25A extending from its distal end and along part of its length that may selectively obstruct or close the conduit 21 by rotation as described below in connection with Figures 4A and 4B. Rotation of piston 25 within cylinder 23 thus provides a shut-off that may selectively permit flow of melt into cylinder 23 and isolates conduit 21 (and the components upstream of conduit) from pressure developed within cylinder 23 and backflow of melt into conduit 21. In this embodiment, a selected volume of melt may flow or be injected from plasticizing barrel 13 through conduit 21 while piston 25 is retracted upstream of conduit 21. Piston 25 may then be moved forward or toward the downstream distal, exit, or outlet end of cylinder 23 to inject resin melt into mold 41.

A nozzle 27 may extend from the distal, outlet, or discharge end of cylinder 23 into a mold 41, through the mold inlet or platen 41A. Mold platen 41A may include a nozzle bore 33 into which nozzle 27 extends and reciprocates longitudinally. A central bore 29 may be formed in nozzle 27 in fluid communication with injection cylinder 23. Central bore 29 may branch into multiple outlets 35 in the surface of nozzle 27 that are normally obstructed or closed by the wall of bore 29. By retracting or reciprocating nozzle 27 rearwardly, outlets 35 may register with an enlarged-diameter portion 43 of bore 33, which permits melt to flow out of bore 29 and downstream into mold 41.

Reciprocation of nozzle 27 toward mold 41 again obstructs outlets 35 and exerts pressure on the melt in the mold for a "pack-and-hold" operation, in which the pressure is exerted and held on the melt in the mold until the melt cools and solidifies. Nozzle 27 may be retracted to release pressure on the mold in a decompression operation. Reciprocation of nozzle 27 relative to mold 41 may be obtained by movement of injection cylinder 23 by carriage 31.

Figures 4A and 4B illustrate the operation of piston 25 and slot or channel 25A as a backpressure-prevention device. As is illustrated, rotation of piston 25 within the bore of cylinder 23 moves channel 25A into and out of alignment with the interior of conduit 21. When aligned as shown in Figure 4A, resin may flow from conduit 21, through channel 25A to the accumulation volume or space forward of piston 25. This may be referred to as an "open" position. When channel 25A is rotated out of alignment with conduit 21, as shown in Figure 4B, flow of resin is obstructed and conduit 21 is isolated from downstream pressure. This may be referred to as a "closed" position.

Figure 5 depicts an injection cylinder portion of another embodiment of the apparatus of the present invention similar to that illustrated in Figures 1 through 3 with structures numbered similarly, but preceded by "1." This embodiment is that illustrated more broadly in Figure 1. In this embodiment, conduit 121 (and ball-check 121A) intersect injection cylinder 123 near the end of the stroke of piston 125. Thus, except in the forwardmost positions, the bore leading to conduit 121 is unobstructed and ball-check valve 121A automatically, without user intervention, isolates conduit 121 from downstream pressure and reverse flow of melt. Otherwise, this embodiment of apparatus 11 is constructed and operates as described with reference to Figures 1 through 3, particularly in connection with nozzle 27, 127 and associated structures.

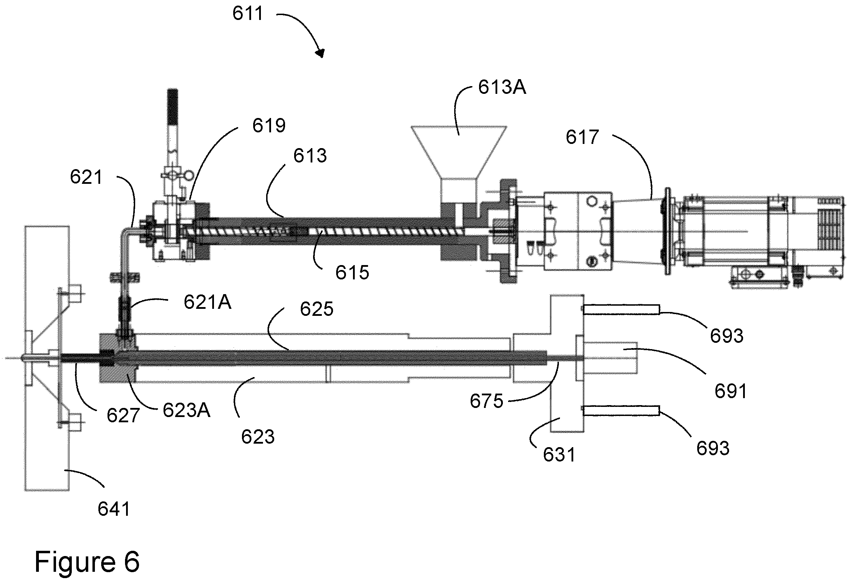

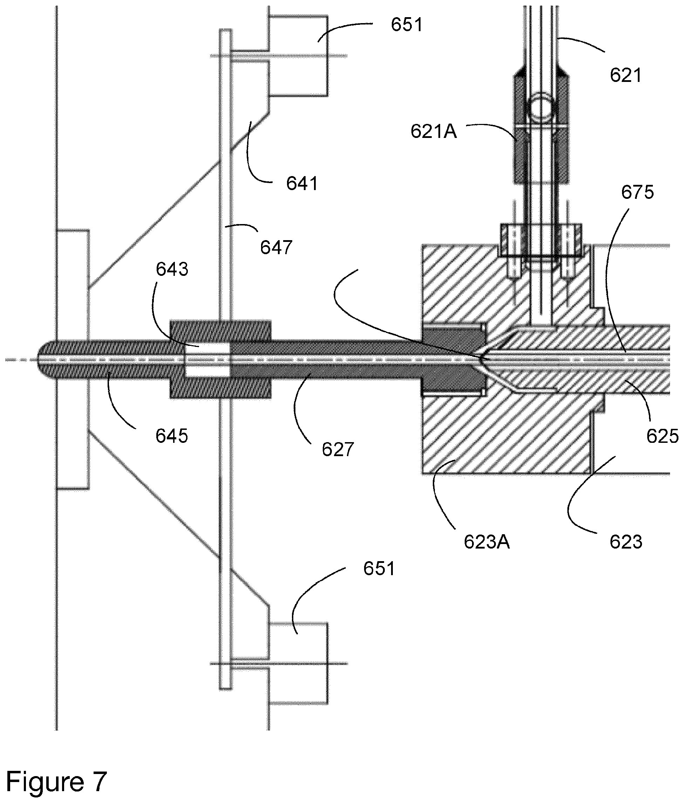

Figures 6, 7, and 8 illustrate another embodiment 611 of the injection molding apparatus of the invention. Although similar in many respects to the foregoing embodiments, it may possess advantages that will be apparent from its description. Apparatus 611 comprises a plasticizing unit or portion with a heated barrel 613 in which a flighted screw 615 may be rotated by a motor or drive unit 617. Resin pellets, granules, or "regrind" may be fed into barrel 613 through hopper 613A and associated inlet into barrel 613. Plasticized or melted and mixed resin may pass from barrel 613, through a filter screen 619, where particulates may be removed, and into conduit 621.

Conduit 621 may pass the melted resin or melt through a ball-check valve that serves as an automatic backpressure prevention device as described above. Conduit 621 may be in fluid communication with an injection cylinder 623 through an inlet formed in an end cap 623A that also forms the downstream exit or outlet of cylinder 623. A piston 625 reciprocates in cylinder 623 to inject the melt into mold 641 through a nozzle 627 that is affixed to the downstream end or exit of cylinder 623.

Nozzle 627 may be received for sliding fit in a cylindrical bore 643 in a mold nozzle 645 that may be directly in contact and fluid communication with mold 641. Mold nozzle 645 may be mounted on a plate or similar mounting structure 647 that is movably coupled to mold 641 by a pair of hydraulic cylinders 651. Mold nozzle 645 may then be moved into and out of contact and fluid communication with mold by operation of hydraulic cylinders 651, while remaining in contact and fluid communication with nozzle 627 and injection cylinder 625.

A reduced-diameter internal or secondary piston or plunger 675 may reciprocate in a concentric bore inside of pistion 625. Secondary piston or plunger 675 may be operated independently of piston 625 and provides additional control over pressure applied to melt in cylinder 623 and downstream in mold 641. In particular, secondary piston or plunger 675 may be moved forward relative to piston 625 to exert pressure on the melt in mold 641 in a pack-and-hold operation. Secondary plunger or piston 675 may also be retracted within piston 625 to permit decompression of mold 641. Secondary plunger or piston may be reciprocated and controlled by an hydraulic cylinder 691 carried by carriage 631. Cylinder 691 is separate and independent from cylinders 693 that operate piston 625 in the conventional and known fashion.

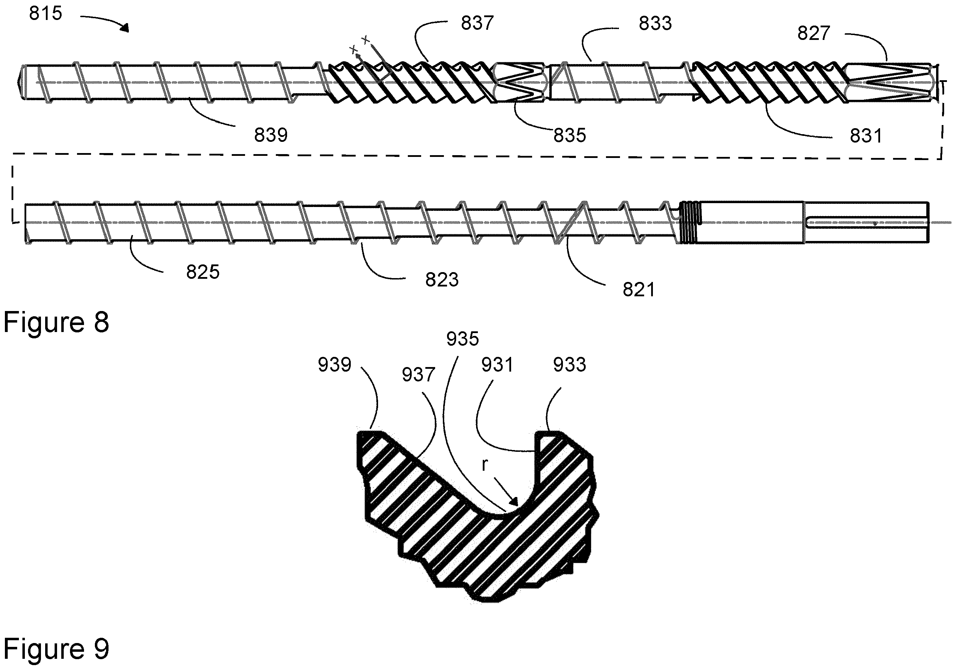

Figure 8 illustrates a screw 811 particularly adapted for use in the injection-molding apparatus 11, 611 described above when processing "regrind" or recycled and non-pelletized polymers or plastics. Screw 811 comprises a series of sections, each having a purpose. The sections are a feed section of a single conventionally spaced flight 821 (having an exemplary depth of about 0.200 inch for a 3.5 inch nominal diameter screw for processing polyethylene regrind) that may extend for about six diameters of the screw and tapers at 823 over about half that length to a shallower depth metering section 825 of about three diameters in length (0.150 inch in depth using the PTE exemplary dimensions). Feed section 821 and metering section 825 take the unmelted material and begin the process of plasticizing or melting and mixing it, with relatively low-intensity mixing.

From metering section 825, the melt passes to a "w-flighted" mixing section 827 that extends over about two diameters (with a depth of about 0.150 inch). Mixing section 827 provides intense shearing action between the sidewall of the barrel and the outer diameter of the w-flights. Melt passes from mixing section 827 into a vent section 831 that has twice the number of flights ("double-flighted") as feed and metering sections 821, 825 and a profile that is detailed with reference to Figure 9. Vent section 831 is vented to the atmosphere through the containment barrel and comprises a "devolatilizing" feature that assists in removing moisture gaseous and volatile components from the melt, which are vented to the atmosphere by vents in the barrel, which is critical to good molding quality. Vent section 829 extends over about three diameters of the screw.

From vent section 831, melt passes to a conventionally flighted section 833 that is initially deeper and steps up to a more conventional depth (0.200 to 0.150 according to the PTE example) and may extend over about two diameters.

Melt then passes to a second mixing section 835 then to a second vent section 837, which are similar to those described above, but mixing section 833 may be shorter than first mixing section 827 at one to 1.5 diameters.

After second vent section 837, melt passes to a discharge section that is conventionally flighted and steps up in depth (from about 0.200 to 0.150 according to the PTE example).

In operation, resin pellets, granules, or regrind are introduced into barrel 13 of the plasticizing unit or portion of apparatus 11, where heat from barrel 13 and the rotation of flighted screw 15 melt, mix and plasticize the resin. Resin or melt flows through filter screen 19 and into conduit 21 and past check valve 21A, if present, and into the injection cylinder or extruder portion of apparatus 11.

Figure 9 is a cross-section of the profile of flight and channel configuration in the vent sections (831, 837 in Figure 8). Leading edge or surface 931 extends briefly vertically from crest 933 of the flight into a circular or arcuate segment 935 of radius r (about 0.125" in the PTE regrind example). Trailing edge 937 extends tangent from circular segment 935 to crest 939 of the next turn of the flight.

In using regrind polymer or plastic, or other "vented" applications, it is critical to extract moisture and volatile components from the melt. This may be accomplished with the profile depicted in Figure 9 as the narrower channel between flights exposes more material for the moisture and volatile component extraction. It is also important to prevent accumulation of material behind the trailing edges of the flights when the channel is partially filled. The angled trailing edge or surface 937 reduces the potential for buildup in the trailing side of the channel.

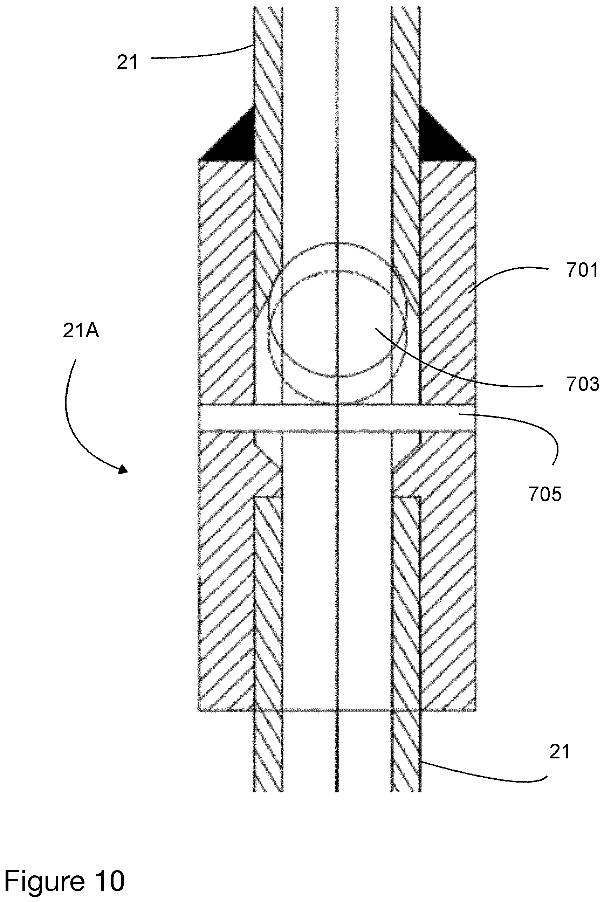

Figure 10 is a section view of a back pressure-prevention device in the form of ball check valve 21A according to an embodiment of the present invention. Ball check valve may comprise a body 701 having a central bore in which conduit 21 is received at either end. A ball 703 is also contained in the bore and constrained against movement in the normal flow direction (downward in the illustration) by a pin 705 extending through body 701 and the bore therethrough. Thus, when flowing in the normal direction, from the barrel of the plasticizing unit toward the injection cylinder, resin melt flows around ball 703. In the event of back pressure from the injection cylinder, ball 703 moves against a seat formed by the upper portion conduit 21 into a closed position where reverse flow through conduit 21 is prevented and components upstream of valve 21A may isolated from the pressures developed downstream of valve 21A.

In the operation of the embodiment of Figures 3, 4A, and 4B, carriage 31, cylinder 23, and nozzle 27 move rearward to purge position and then are moved forward to a recovery position, with channel 25A in alignment with the inlet from conduit 21. Resin or melt flows into cylinder 23 and piston 25 retracts to define or select the volume of the melt to be injected, the "shot size." Carriage 31, cylinder 23 and nozzle 27 are moved rearwardly to inject position (allowing melt to flow through nozzle 37) and piston 25 is rotated 90° to the closed position, out of alignment with conduit 21. Injection then is commenced by moving piston 25 forward. Carriage 31 and nozzle 27 then are moved forward to pack-and-hold position. After pack-and-hold, and any , piston 25 is rotated to align channel 25A with conduit 21 and recovery is commenced. Carriage 31 and nozzle 27 then are moved rearwardly for decompression of mold 41.

For the embodiment of Figure 5, operation is identical to that described above, except no rotation of piston 125 is required, as ball-check valve 21A isolates upstream components from downstream pressure and reverse flow of melt without user intervention.

For the embodiment of Figures 6 through 8, operation of the plasticizing unit is similar, but injection operations using injection cylinder 623 differ. First, carriage 631, cylinder 623, and nozzle 627 must be aligned and registered with mold nozzle 645. Cylinders 651 then may be fully extended, placing nozzle 645 fully into communication with mold 641. Cylinders may then be retracted approximately one inch, placing nozzle 645 into a purge position out of contact and communication with mold 641. Carriage 631, cylinder 623, and nozzle 627 then may be moved forward until nozzle 627 registers in bore 643. Injection operations may then commence.

After any necessary purging with mold nozzle 645 retracted and disengaged from mold 641, cylinders 651 may be extended to place nozzle 645 in communication with mold 641. Piston 625 then may be retracted in cylinder 623 to set the injection shot size, and the volume in cylinder 623 thus set, filled with melt from plasticizing unit. Piston 625 then may be moved forward to inject the melt into mold 641. Upon completion of injection, internal or secondary piston 675 may be extended by actuation of cylinder 691 to exert pack-and-hold pressure on the melt in mold 641. Upon completion of pack-and-hold, internal or secondary piston 675 may be retracted for decompression. After decompression completes, mold 641 may be opened.

The present invention has a number of advantages. Principally, by using the present invention, 100% scrap plastic "regrind" can be injection molded without a dryer or other preprocessing of the regrind. The need to pelletize scrap plastic is eliminated, which results in savings of as much as $0.20 per pound at current pricing. This is not possible with conventional injection-molding equipment, which requires any scrap material to be pelletized by a third party or using expensive pelletiing equipment.

Further, the internal or secondary piston embodiment may eliminate over packing as the small internal piston provides a far better pack-and-hold pressure control.

The invention may be manufactured and sold as new equipment or may be retrofitted to existing injection molding apparatus.

The invention has been described with reference to preferred embodiments thereof. It is thus not limited, but is susceptible to variation and modification without departing from the scope and spirit of the claims, which follow.

## Claims

1. An injection molding apparatus for injecting resin into a mold, the apparatus comprising:
an injection cylinder in fluid communication with the mold, wherein movement of a piston within the cylinder injects a selected quantity of resin into the mold;
a plasticizing unit including a flighted screw rotating in a heated containment barrel for plasticizing resin the plasticizing unit in selective fluid communication with the injection cylinder for supplying the injection cylinder with plasticized resin;
a conduit connecting the plasticizing unit to the injection cylinder to communicate resin from the plasticizing unit to the injection cylinder;
a backpressure-prevention device associated with the injection cylinder to prevent pressure developed in the injection cylinder from acting on one of the conduit and plasticizing unit;
a nozzle extending from the injection cylinder into a bore in the mold, the nozzle including a central bore in fluid communication with the injection cylinder, the nozzle configured to selectively permit flow of resin into the mold and to exert pressure on resin in the mold through reciprocation of the nozzle in the bore.

2. The injection molding apparatus according to claim 1 wherein the backpressure prevention device further comprises a check valve in the conduit to prevent flow of resin from the injection cylinder to the plasticizing unit.

3. The injection molding apparatus according to claim 1 or claim 2, wherein the backpressure prevention device further comprises:
an inlet in the injection cylinder connected to the conduit; and
a channel formed in the piston that is movable between an open position aligned with the inlet and a closed position in which the piston obstructs the inlet.

4. The injection molding apparatus according to claim 3, wherein the piston and channel are rotated between the open and closed positions.

5. The injection molding apparatus according to any preceding claim, further comprising:
a screen disposed in the conduit between the plasticizing unit and the injection cylinder to capture particulate contaminants in the resin.

6. The injection molding apparatus according to claim 2 or claim 5 as dependent on claim 2, wherein the piston further comprises a secondary plunger arranged for reciprocation within the piston, wherein the secondary plunger selectively exerts pressure on resin in the injection cylinder independently of the piston.

7. An injection molding apparatus for injecting resin into a mold, the apparatus comprising:
an injection cylinder in fluid communication with the mold, wherein movement of a piston within the cylinder injects a selected quantity of resin into the mold;
a plasticizing unit including a flighted screw rotating in a heated containment barrel for plasticizing resin the plasticizing unit in selective fluid communication with the injection cylinder for supplying the injection cylinder with plasticized resin;
a conduit connecting the plasticizing unit to the injection cylinder to communicate resin from the plasticizing unit to the injection cylinder;
a secondary plunger arranged for reciprocation within the piston, wherein the secondary plunger selectively exerts pressure on resin in the injection cylinder independently of the piston; and
a check valve between the conduit and the injection cylinder to prevent pressure developed in the injection cylinder from acting on one of the conduit and plasticizing unit.

8. The injection molding apparatus according to claim 7, further comprising:
a screen disposed in the conduit between the plasticizing unit and the injection cylinder to capture particulate contaminants in the resin.

9. The injection molding apparatus according to claim 7 or claim 8, further comprising:
a mold nozzle movable into and out of communication with the mold; and
a cylinder nozzle in fluid communication between the mold nozzle and the injection cylinder.

10. An injection molding apparatus for injecting resin into a mold, the apparatus comprising:
an injection cylinder in fluid communication with the mold, wherein movement of a piston within the cylinder injects a selected quantity of resin into the mold;
a plasticizing unit including a flighted screw rotating in a heated containment barrel for plasticizing resin the plasticizing unit in selective fluid communication with the injection cylinder for supplying the injection cylinder with plasticized resin;
a conduit connecting the plasticizing unit to the injection cylinder to communicate resin from the plasticizing unit to the injection cylinder;
an inlet in the injection cylinder connected to the conduit; and
a channel formed in the piston that is movable between an open position aligned with the inlet and a closed position in which the piston obstructs the inlet.

11. The injection molding apparatus according to claim 10, wherein the piston and channel are rotated between the open and closed positions.

12. The injection molding apparatus according to claim 10 or claim 11, further comprising:
a screen disposed in the conduit between the plasticizing unit and the injection cylinder to capture particulate contaminants in the resin.
